Europäisches Patentamt

European Patent Office

Office européen des brevets

(11) Publication number: 0 267 018 B1

# EUROPEAN PATENT SPECIFICATION

(45) Date of publication of patent specification: **26.02.92**   (51) Int. Cl.⁵: **B60T 8/48**

(21) Application number: **87309754.7**

(22) Date of filing: **04.11.87**

(54) **Improvements in hydraulic systems for vehicles.**

(30) Priority: **05.11.86 GB 8626426**
**17.11.86 GB 8627396**
**09.02.87 GB 8702848**
**24.02.87 GB 8704300**
**24.03.87 GB 8706967**

(43) Date of publication of application:
**11.05.88 Bulletin  88/19**

(45) Publication of the grant of the patent:
**26.02.92 Bulletin  92/09**

(84) Designated Contracting States:
**DE FR GB IT**

(56) References cited:
**FR-A- 2 565 183**
**GB-A- 2 144 188**
**GB-A- 2 149 035**
**GB-A- 2 168 771**

(73) Proprietor: **LUCAS INDUSTRIES public limited company**
**Great King Street**
**Birmingham, B19 2XF West Midlands(GB)**

(72) Inventor: **Farr, Glynn Phillip Reginald**
**21 The Hamlet**
**Leek Wootton Warwickshire(GB)**

(74) Representative: **Spall, Christopher John et al**
**BARKER, BRETTELL & DUNCAN 138 Hagley Road**
**Edgbaston Birmingham B16 9PW(GB)**

## Description

This invention relates to hydraulic systems for vehicles of the type having a front pair of wheels and a rear pair of wheels, of which first and second wheels of at least one pair are driven, and each wheel is provided with an hydraulically actuated brake, the system being of the kind comprising a combined booster, or servo, and hydraulic master cylinder assembly for applying all the brakes, a speed sensor for sensing the speed of rotation of each wheel, modulator means for modulating the supply of fluid from the assembly to the brakes, and an electronic control module which receives signals from the speed sensors and is operative to actuate the modulator means in turn to control operation of a brake, whereby to control the behaviour of a respective wheel depending upon the nature and duration of the said signal.

With the modern tendency for motor vehicles, and in particular medium and small motor cars, to be equipped with larger engines, or at least engines capable of generating relatively greater power, there is a problem of preventing the driven wheels from spinning when the driving torque applied to a wheel exceeds the gripping force between the tyre of such a wheel and the road or other surface. The gripping force is of course determined by the co-efficient of friction ($\mu$) between the tyre and the road, which depends mainly upon the ($\mu$) of the road itself, and the reaction force at that point, which depends upon the load applied to that wheel by the weight of the sprung mass of the vehicle. Thus, although the surface of a road may be of relatively high ($\mu$), spinning of a wheel may still occur should, for example, the relaid engine torque overcome the weight on the driven wheel multiplied by ($\mu$) multiplied by the rolling radius of the tyre.

When a driven wheel on one side of a vehicle spins, due to the presence of the differential, insufficient drive torque can be transmitted from the engine and through the gear box to the non-spinning wheel on the opposite side of the vehicle. Since insufficient traction is achieved, no forward motion can be imparted to the vehicle from the engine.

It is known to equip motor vehicles, and particularly motor cars of the larger luxury type, with complex electronic means for preventing driven wheels from spinning. Clearly the provision of such electronic means is expensive and adds considerably to the overall price of the vehicle.

We are aware of GB-A- 2 168 771 in which a pedal-operated combined booster and hydraulic master cylinder assembly has a booster chamber, and an auxiliary chamber, the booster chamber normally being pressurised to operate the assembly for normal braking by displacement by the pedal of a valve spool incorporated in a brake-control valve, and fluid being dumped from the booster chamber and into the auxiliary chamber when the pedal is released, a separate valve being adapted to operate the assembly independently of the pedal in response to drive slip (spin) of a driving wheel, and the said separate valve causing fluid under pressure to flow into the booster chamber with a partial quantity of the fluid initially flowing into the auxiliary chamber through the brake valve, which then acts as a restrictor.

According to our invention in an hydraulic system of the kind set forth a pedal is provided for actuating the combined assembly to apply the brakes normally for service vehicle retardation, and a servo-pressure control valve is operative to control the generation of servo assistance for the assembly in response to pressure generated by operation of the pedal, traction control valve means responsive to a spin signal from a driven wheel and recognised by the control module being adapted to control the generation of servo assistance for the assembly whereby to actuate the assembly independently of the pedal to apply the brake on the said driven wheel, the generation of the servo assistance by the traction control valve means being independent of and by-passing the servo-pressure control valve.

By operating the assembly independently of the pedal we are able automatically without any assistance from the driver, and independently of the servo-pressure control valve, to achieve traction control by preventing the respective wheel from spinning, and the induced torque from that braked wheel is transferred to the other, non-spinning, wheel of that driven pair to apply a forward, driven, motion to the vehicle.

Conveniently the brake on the said one driven wheel is applied at a rate and in a sequence determined by operation of the modulator means. Consequently, the brake is released when the acceleration of the wheel has been decreased from a critical value, and traction can then be applied to the vehicle from that wheel.

Preferably the assembly is adapted to be operated independently of the pedal by the provision of a solenoid-operated valve which comprises a solenoid responsive to signals from the control module, a valve member operable by the solenoid and adapted to co-operate, alternately, with a pair of first and second spaced valve seatings, co-operation of the valve member with the first seating preventing energisation of the booster by the solenoid-operated valve but permitting application of the brakes when the assembly is operated by the pedal, and co-operation of the valve member with the second seating permitting energisation of the booster to apply the brake on the spinning driven wheel under the control of the modulator means, application of the brakes on the non-driven wheels being prevented.

In some layouts it may be necessary to include a second solenoid-operated valve operable in sequence with the first and operative to isolate the brakes on the non-driven wheels from its brake-applying source, before applying the brake on the said one driven wheel.

Some embodiments of our invention are illustrated in the accompanying drawings in which:-

Figure 1 is a layout of an hydraulic system for a four wheel vehicle;

Figure 2 is a layout similar to Figure 1 but including a pneumatic booster remote from the master cylinder; and

Figure 3 is a layout similar to Figure 2 but adapted for use with a vehicle of the rear wheel drive type.

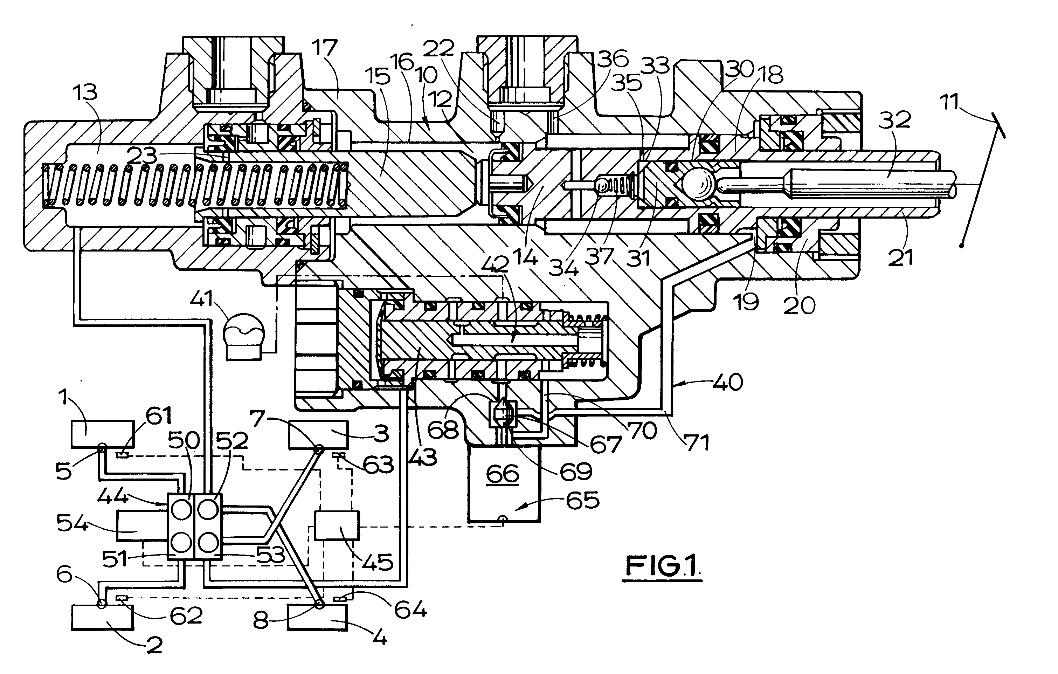

In the hydraulic system illustrated in Figure 1 of the accompanying drawings front wheels 1, 2 are driven from the engine of the vehicle through a conventional gear box and differential assembly. The wheels 3, 4 are non-driven and freely rotatable.

The front wheels 1, 2 are provided with brakes 5, 6 respectively, and the rear wheels 3, 4 with brakes 7 and 8 respectively.

A combined hydraulic booster and tandem master cylinder assembly 10 operable by a pedal 11 for normal service braking, is incorporated in the system.

The assembly 10 comprises primary and secondary pressure spaces 12 and 13 in front of primary and secondary pistons 14 and 15 which work in a common bore 16 in a housing 17. The primary piston 14 is of differential outline working in a stepped portion of the bore 16. The portion 18 of the piston 14 which is of greater diameter constitutes a booster piston which is exposed to pressure in a booster space 19 defined between the piston 14 and an end closure 20 for that end of the bore 16 and through a sealed opening in which an axial extension 21 of reduced diameter projects rearwardly. The primary pressure space 12 in front of the primary piston 14 normally communicates with a reservoir for fluid through a recuperation port 22 in the wall of the housing 17 of the assembly. Similarly the secondary pressure space 13 in front of the secondary piston 15 normally communicates with the reservoir through a recuperation port 23 in the wall of the piston 15 itself.

The primary piston 14 is formed with auxiliary bore 30 in which works an auxiliary piston 31, and the piston 31 is coupled to the inner end of a push-rod 32 operated by the pedal 11. A damper chamber 33 defined in the auxiliary bore 30 by the inner end of the auxiliary piston 31 is connected to the reservoir through a one-way valve 34, a restricted radial passage 35, and a balance port 36 in the wall of the housing 17. The one-way valve 34 is normally urged into a closed position by means of a light spring 37.

To operate the booster by pressurisation of the booster space 19, hydraulic fluid under pressure is supplied to it through an internal passage 40 from an hydraulic accumulator 41, under the control of a servo-pressure control valve 42 incorporating a control spool 43. The spool valve 42 is housed in the housing 17, and is operated by a relatively small forward movement of the piston 14 sufficient to pressurise the pressure space 12 slightly and to which one end of the spool 43 is exposed.

The brake 5 on the front wheel 1 and the brake 8 on the diagonally opposite rear wheel 4 are both applied from the pressure space 13 of the master cylinder assembly 10, and the brake 6 on the front wheel 2 and the brake 7 on the diagonally opposite rear wheel 3 are both applied from the pressure space 12. Thus the system is of the 'X' split type.

The supply of fluid to the brakes is modulated by a modulator assembly 44 which is adapted to control operation of the brakes independently of each other in response to energising current from an electronic control module 45.

The modulator assembly 44 comprises four separate modulators 50, 51, 52, and 53 of known type. Specifically a single pump assembly driven by an electric motor 54 provides the source of power to replenish the fluid relieved from the brakes at the termination of a skid signal and the pump assembly is also operative to charge the accumulator 41 by fluid drawn from the reservoir. The pump assembly conveniently forms the subject of our co-pending patent application No. of even date and need not be described further herein. Each modulator 50, 51, 52 and 53 incorporates a solenoid-operated valve operative in response to a signal from a respective speed sensor 61, 62, 63 and 64 to initiate modulation of the supply of fluid from the respective pressure space 13, 12 to the respective brake 5, 6, 7 and 8. Electrical signals from the sensors are fed into the electronic control module 25 which, depending on the nature and duration of any signal, may emit an energising current.

When the brakes 5, 6, 7 and 8 are to be applied for normal service operation to effect retardation of the vehicle, the pedal 11 acts to advance the boost piston 18 in the bore 16. This action operates the spool valve 42, as described above, and high pressure fluid from the accumulator 41 supplied to the booster space 19 acts to advance the piston 14 in the bore 16 to augment the force from the pedal 11. Pressurised fluid is supplied simultaneously from both pressure spaces 12 and 13 to the brakes 5 and 6 of the driven front wheels 1 and 2, and to the rear wheel brakes 8 and 7, from the respective diagonally opposite front wheels 5, 6.

The behaviour of the braked front wheels 1, 2, and rear wheels 3, 4, is controlled by the respective modulators in a known manner in response to energising currents from the control module 45 which in turn, depend, upon the signals from the respective speed sensors 61, 62, 63 and 64.

In the event of the pressure applied to one of the brakes 5, 6, 7, 8 being relieved to correct a skid condition, the brake fluid is replenished automatically by the pump driven by the motor 54 and incorporated in the modulator assembly 44.

The assembly 10 is modified so that it can be operated independently of the pedal 11 to prevent the front driven wheels from spinning when subjected to a driving torque in excess of the gripping force between the tyre of such a wheel and the road and other surfaces.

As illustrated in Figure 1 of the drawings the assembly incorporates a traction-control solenoid-operated valve 65. The valve 65 comprises a solenoid 66 adapted to be energised by a current from the control module 45, and adapted to control a valve head 67 engageable alternately with spaced valve seatings 68 and 69. The seating 69 is disposed between two different sections 70 and 71 of the passage 40 to control communication therebetween. The seating 68 is located between the spool valve 42 and the passage section 71 to provide direct communication between the accumulator 41 and the booster space 19.

Normally, when the solenoid 66 is de-energised, the valve head 67 is urged into engagement with the seating 68 by means of a spring (not shown). This places the two passage sections 70 and 71 in direct communication, but cuts-off direct communication between the accumulator 41 and the section 71. The accumulator 41 can, however, still communicate with the passage 40 under the control of the spool valve 42 to control booster-operation of the assembly 10 in order to apply the brakes 5, 6, 7 and 8 for vehicle retardation as described above.

In the event of one of the driven wheels, say the wheel 1, being subjected to an excessive wheel acceleration, indicative of a "wheel spin" condition, the signal from the respective speed sensor 61 received by the control module 45 causes the module to emit an electrical current which energises the solenoid 66 in turn to urge the head 67 away from the seating 68 and into engagement with the seating 69. This isolates the passage section 70 from the section 71, and places the accumulator 41 in direct communication with the passage section 71 to pressurise the booster space 19. The assembly 10 then operates as described above with fluid from the pressure spaces 12 and 13 being supplied to the modulator assembly 44 which, in turn, supplies fluid under pressure to the brake 5 only in order to brake the wheel 1.

When traction is restored to the wheel 1, the signal from the sensor 61 reduces and the solenoid 66 is de-energised with the valve 65 returning to its initial position.

The control module 45 is operative to differentiate signals from the speed sensors 61, 62, 63 and 64 and, when it receives signals from either sensor 61 or 62, indicative of a "wheel spin" condition in either wheel, the control module 45 not only energises the solenoid 66 as described above, but also energises the solenoid of the valve in the modulator 51 or 50 leading to the non-spinning wheel on the surface of higher ($\mu$) to prevent the brake on that wheel from being applied. It also energises the solenoids of the modulators 52 and 53 to prevent the rear wheel brakes 7 and 8 from being applied.

Thus in a "wheel spin" preventing mode the modulator assembly 44 acts in an opposite sense from that of the anti-lock mode described above.

When the assembly 10 is operated to apply the brakes normally the auxiliary piston 31 acts on the primary piston 14 to advance it in the bore and initiate operation of the assembly with boost assistance, in a known manner. The effective volume of the chamber 33 is therefore at a minimum. During such braking operations the traction-control solenoid-operated valve 65 is inoperative.

During "traction control" the assembly 10 is operated independently of the pedal to control "wheel spin" as described above. Since the pedal 11, the push-rod 37 and the auxiliary piston 31 are restrained against movement, the primary piston 14 moves relatively away from the auxiliary piston 31 and the effective volume of the chamber 33 is increased and is filled with fluid by flow through the one-way valve 34 which opens against the loading in the light spring 37.

Should the driver transfer his foot from the accelerator to the brake pedal 11, any brake-applying force is transmitted through the push-rod 32 to the auxiliary piston 31 and the chamber 33 is pressurised. The one-way valve 34 closes and the fluid is expelled from the chamber 33 at a rate determined by flow through the passage 35.

During this operation the driver will not experience a sudden long pedal travel, but will feel an instantaneous pedal reaction and braking effort, although the brake pedal will slowly fall in response to the reduction in the effective volume of the chamber 33 as described above.

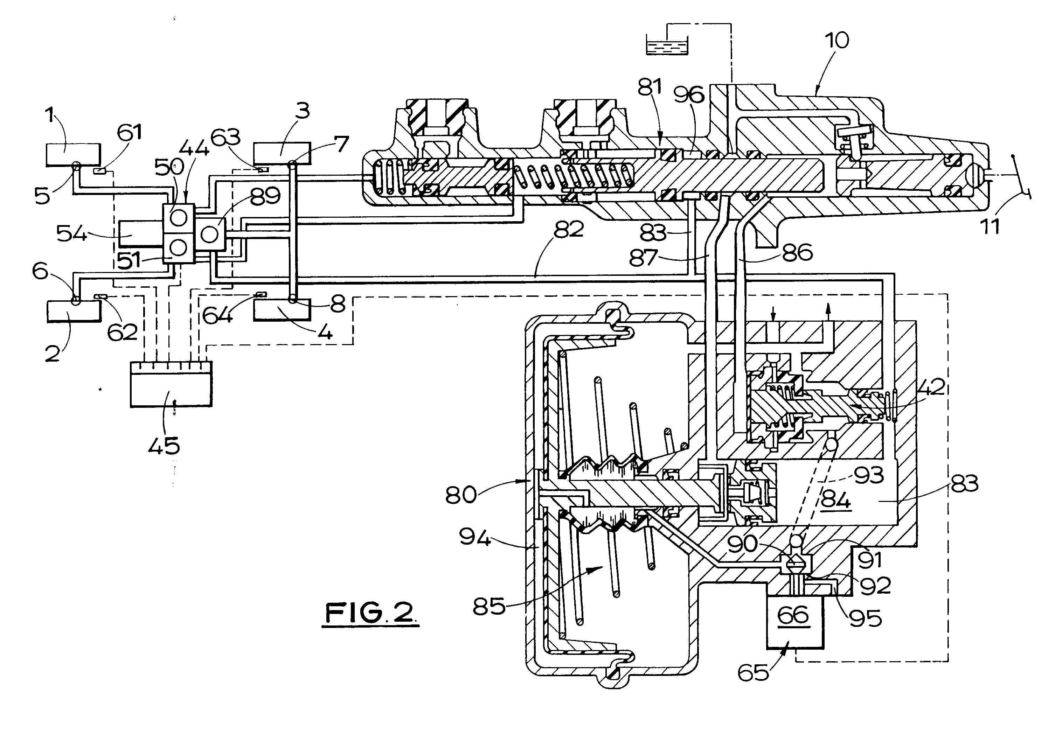

In the braking system illustrated in Figure 2 of the accompanying drawings the assembly 10 comprises a pneumatically-operated booster and auxiliary master cylinder assembly 80, and a tandem master cylinder 81 which is remote from the booster 80. The brakes on the rear wheels 3,4 are applied independently of the brakes on the front wheels by means of a pipe-line 82 from the pressure space 84 of the auxiliary master cylinder 83 of the booster 80 which also provides the servo pressure for the master cylinder 81 from a branch line 83 from the pipe-line 82.

The assembly 80 comprises a booster 85 for operating the auxiliary master cylinder 83.

The booster 80 and the master cylinder 81 need not be described in detail since they are similar in construction to the booster and master cylinder forming the subject of our co-pending patent application No. 8700484 dated 9th January 1987, with the two units being inter-connected by external connections 86 and 87 which facilitates installation, and with energisation of the booster 80 normally controlled by the servo-pressure control valve 42.

The traction-control solenoid-operated valve 65 is arranged to energise the booster 80 in response to a "wheel spin" signal from the control module 45, and independently of the pedal 11 and associated input mechanism which therefore remains in a normal, inoperative condition.

The motor-powered modulator assembly 44 is modified in that a single modulator 89 having a single solenoid-operated valve is provided to modulate the supply of fluid to the brakes 7,8 on both rear wheels of the vehicle, in place of two separate modulators 52 and 53. The modulator 89 is responsive to signals from either of the wheel speed sensors 63 or 64.

The solenoid-operated traction control valve 65 comprises a double acting valve member 90 for alternative engagement between spaced valve seatings 91 and 92. The valve seating 91 is located between an air energising passage 93 for the booster and its energising boost chamber 94, and the seating 92 is located between an air inlet passage 95 and the boost chamber 94.

In a normal inoperative position of the system the solenoid operated valve 65 is de-energised so that the valve member 90 is spaced from the seating 91 and in engagement with the seating 92.

During normal braking, the remote booster 80 applies the brakes on the rear wheels 3,4 directly and provides servo assistance to the master cylinder 81 to apply the brakes on the front wheels 1,2.

During anti-lock control of any wheel, the motor powered modulator assembly 44 controls the release and re-application of pressure to the brake on the wheel subject to anti-lock control, and the booster takes no remedial action.

When a front wheels 1,2 spins, this is sensed by the respective speed sensors 61,62 and the controller 45 energises the solenoids of the valve 64 to urge the double-acting valve member 90 into engagement with the seating 91, in turn to isolate the passage 93 from the boost chamber 94 and admit air to the boost chamber 94 to energise the booster 80 independently of operation of the pedal.

The remote booster 80 is energised to initiate application of the brakes on both front and rear wheels. The brakes on the non-driven rear wheels 3,4 are released by operation of the rear anti-lock solenoid valve of the modulator 89 and the driven front wheels 1,2 are controlled, as in the system of Figure 1, to prevent wheel spin.

Specifically, when pressure is applied to the front wheels 1,2 the non-spinning front wheel has its anti-lock solenoid in the modulator assembly 50 energised to prevent application of pressure. Meanwhile the solenoid of the valve corresponding to the "spinning" wheel remains de-energised to permit the application of pressure to the brake on that wheel to prevent the spin. At the same time the electric motor of the assembly 54 revolves to operate the pumps.

When the wheel stops spinning, brake pressure is relieved to an expander chamber and the pump returns fluid to the master cylinder 81.

Should the wheel start to spin again the brake pressure is re-applied once the corresponding anti-lock solenoid in the assembly 44 is de-energised. In this way the speed of the driven wheels 1,2 can be controlled many times a second under the control of the anti-lock modulator 45 and energised by the electric motor 54.

The booster 80 continues to apply the brakes on the front wheels 1,2 independently of the pedal but no further modification of its pressure is required.

When the vehicle is in motion and no further control is necessary, the solenoid of the valve 65 is de-energised, and the system reverts to normal.

Should the brakes be applied before the system reverts to normal, the solenoid of the valve 65 is de-energised, a pressure is generated in the booster chamber 96 of the master cylinder 91 to apply the front wheel brakes, and the brakes on the rear wheels 7,8 are re-connected to the auxiliary booster 83.

Immediately following traction control, the primary piston of the master cylinder 81 may be displaced from its normal position. The travel of the pedal will not however increase because a fluid strut is established between the pedal-operated piston and the primary piston as soon as the control chamber defined therebetween is isolated from the reservoir.

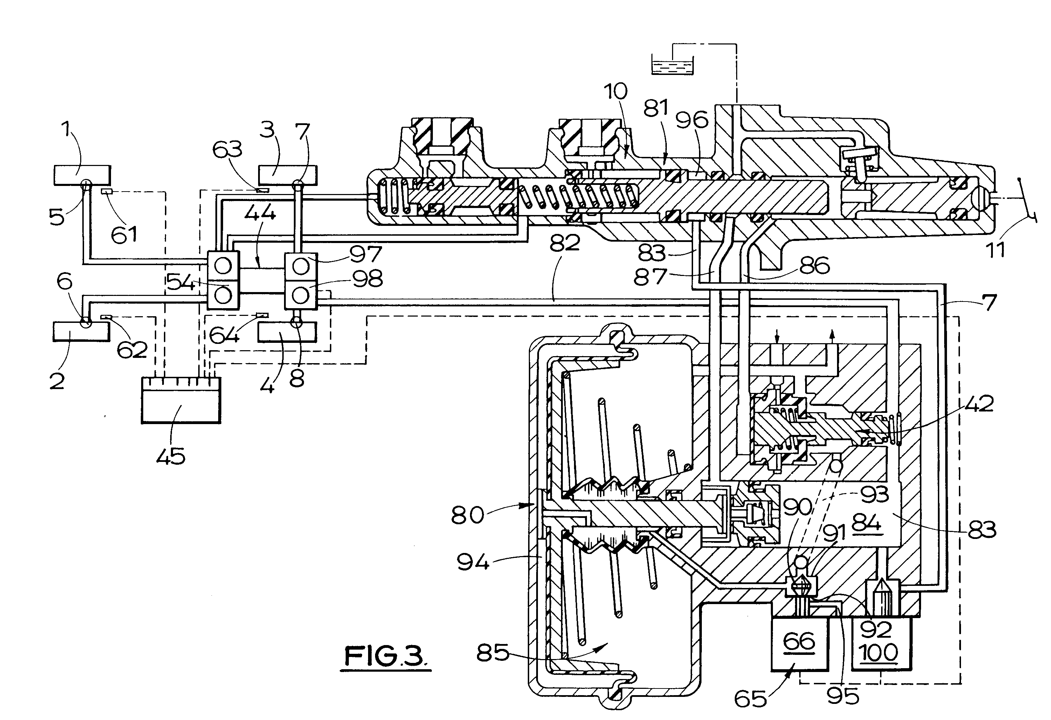

The system illustrated in the layout of Figure 3 is for a vehicle of the rear-wheel drive type in which the rear wheels 3,4 are liable to spin.

In this system the solenoid-operated anti-lock modulator valve 89 is replaced by two similar valve 97,98, each adapted to control the release and re-application of a brake on a respective rear wheel 4,3, in accordance with signals from the respective speed sensor 63,64. A single acting solenoid operated valve 100 is incorporated to isolate the auxiliary cylinder 83 from the master cylinder 81 to prevent the brakes on the front wheels 1,2 to be applied when traction control is required.

Thus, when traction control is required, the solenoids of both valve 65 and 100 are energised. The booster 80 is energised to apply the brakes on the rear wheels 3,4 for traction control in accordance with the signals from the speed sensors 63,64 and under the control of the respective anti-lock valves 97,98. However, since the valve 100 is closed to isolate the auxiliary master cylinder 83 and the master cylinder 81, the brakes on the front wheels 1,2 cannot be applied.

**Claims**

1. An hydraulic system for vehicles of the type having a front pair of wheels (1, 2) and a rear pair of wheels (3, 4) of which first and second wheels of at least one pair are driven, and each wheel is provided with an hydraulically actuated brake (5, 6, 7, 8), the system being of the kind comprising a combined booster, or servo, and hydraulic master cylinder assembly (10) for applying all the brakes, a speed sensor (61, 62, 63, 64) for sensing the speed of rotation of each wheel, modulator means (44) for modulating the supply of fluid from the assembly to the brakes, and an electronic control module (45) which receives signals from the speed sensors and is operative to actuate the modulator means in turn to control operation of a brake, whereby to control the behaviour of a respective wheel depending upon the nature and duration of said signal, in which a pedal (11) is provided for actuating the combined assembly (10) to apply the brakes normally for service vehicle retardation, and a servo-pressure control valve (42) is operative to control the generation of servo assistance for the assembly in response to pressure generated by operation of the pedal, traction control valve means (65, 100) responsive to a spin signal from a driven wheel and recognised by the control module being adapted to control the generation of servo assistance for the assembly whereby to actuate the assembly independently of the pedal to apply the brake on the said driven wheel, characterised in that the generation of the servo assistance by the traction control valve means is independent of, and by-passes, the servo-pressure control valve.

2. An hydraulic system as claimed in claim 1, characterised in that the said one driven wheel is applied at a rate and in a sequence determined by operation of the modulator means (44),

3. An hydraulic system as claimed in claim 1 or claim 2, characterised in that the assembly (10) is adapted to be operated independently of the pedal by a solenoid-operated valve (65) which comprises a solenoid (66) responsive to signals from the control module, a valve member (67) operable by the solenoid and adapted to co-operate, alternately, with a pair of first and second spaced valve seatings (81, 82), co-operation of the valve member with the first seating preventing energisation of the booster (19,70) by the solenoid-operated valve but permitting application of the brakes when the assembly is operated by the pedal and co-operation of the valve member with the second seating permitting energisation of the booster to apply the brakes on the spinning driven wheel under the control of the modulator means (44), application of the brakes on the non-driven wheels being prevented.

4. An hydraulic system as claimed in claim 3, characterised in that a second solenoid-operated valve (100) operable in sequence with the solenoid-operated valve (65) is operative to isolate the brakes on the non-driven wheels from its brake-applying source, before applying the brake on the said one driven wheel.

5. An hydraulic system as claimed in any of claims 1-3, in which the assembly (10) comprise a tandem hydraulic master cylinder having first and second pressure spaces (12, 13), and a booster space 19 adapted to be pressurised by fluid from a high pressure source (41), characterised in that the communication between source (41) and the booster space (19) for normal service retardation is controlled by the servo-pressure control valve (42) in response to initial pressurisation of one of the pressure spaces (12) upon operation of the pedal, and that communication between the source (41) and the booster space (19) for traction control is controlled by the traction control valve members (65, 100).

6. An hydraulic system as claimed in claim 5, characterised in that the brake (5, 6) on each front wheel (1, 2) and on each diagonally opposite rear wheel (4, 3) is applied from a respective one of the two pressure spaces (13, 12), and the supply of fluid to each brake is controlled by a modulator (50, 51, 53, 52) responsive to a signal from each respective spaced sensor (61, 62, 64, 63).

7. An hydraulic system as claimed in any of claims 1-3, in which the assembly (10) comprises a tandem hydraulic master cylinder (81) having first and second pressure spaces, and a booster space (96), in combination with a pneumatically-operated booster and auxiliary master cylinder assembly (80) comprising a booster (80) and an auxiliary master cylinder (83), the booster space being pressurised by fluid pressure generated in the pressure space (84) of the auxiliary master cylinder (83) in response to energisation of the booster (80), characterised in that the energisation of the booster (80) for normal service retardation is controlled by the servo-pressure control valve in response to initial pedal operation of the assembly (10), and that energisation of the booster (80) for traction control is controlled by the traction control valve means (65, 100).

8. An hydraulic system as claimed in claim 7, characterised in that the brakes (5, 6) on the front wheels (1, 2) of the vehicle are each applied from a different pressure space of the tandem master cylinder, and the brakes (7, 8) on both rear wheels (3, 4) are applied from the auxiliary master cylinder (80), energisation of the booster (80) by the traction control valve means (65, 100) operating the auxiliary master cylinder (83) to pressurise the booster space.

9. An hydraulic system as claimed in claim 8, characterised in that the front wheels (1, 2) of the vehicle are driven, and the brakes (7, 8) on the rear wheels (3, 4) are isolated from the auxiliary master cylinder (83) by the modulator means (44) when the traction control valve means (65) is operated to energise the booster (80).

10. An hydraulic system as claimed in claim 8, characterised in that the rear wheels (3, 4) of the vehicle are driven, and the second solenoid-operated valve (100) is adapted to isolate the auxiliary master cylinder (83) from the booster space (96) to prevent operation of the brakes (5, 6) on the front wheels when the traction control valve means (65) is operated to energise the booster (80).

## Revendications

1. Un système hydraulique pour véhicules ayant une paire de roues avant (1, 2) et une paire de roues arrière (3, 4) et dont ladite première et ladite seconde roue d'au moins une desdites paires de roues sont entraînées, et chaque roue est équipée d'un frein hydraulique (5, 6, 7, 8), le système étant du type comportant: un ensemble composé (10) comprenant un dispositif d'asservissement ou surpresseur et un maître-cylindre hydraulique dont la fonction est d'appliquer tous les freins, un capteur de vitesse (61, 62, 63, 64) pour capter la vitesse de rotation de chaque roue, un moyen de régulation (44) pour moduler l'alimentation en fluide hydraulique de la source aux freins, et un module de contrôle électronique (45) qui reçoit les signaux des capteurs de vitesse et les retransmet ensuite pour actionner le moyen de régulation pour commander l'application d'un frein, permettant de contrôler le comportement de la roue correspondante en fonction de la nature et de la durée dudit signal, ledit système étant équipé d'une pédale (11) servant à actionner l'ensemble composé (10) pour appliquer les freins normalement en vue de ralentir le mouvement du véhicule et une soupape de contrôle (42) asservie dont la fonction est de contrôler l'assistance fournie par le dispositif d'asservissement et destinée à l'ensemble en réponse à la pression générée par l'actionnement de la pédale, un moyen de contrôle de traction à soupape (65, 100) sensible à un signal d'emballement généré par une roue entraînée et identifié par le module de contrôle dont la fonction est de commander la génération de l'assistance du dispositif d'asservissement destinée à l'ensemble et qui sert à actionner l'ensemble indépendamment de la pédale pour appliquer les freins sur ladite roue entraînée, ledit système hydraulique étant caractérisé par le fait que la génération d'une assistance du dispositif d'asservissement par le moyen de contrôle de traction à soupape est indépendante de la soupape de contrôle de pression asservie et en dérivation sur ladite soupape.

2. Un système hydraulique selon la revendication 1., caractérisé par le fait que le frein est appliqué à une vitesse et selon une séquence déterminée par l'action du moyen de régulation (44),

3. un système hydraulique selon la revendication 1. ou la revendication 2., caractérisé en outre par le fait que l'ensemble composé (10) peut être actionné indépendamment de la pédale par une soupape à solénoïde (65) comprenant un solénoïde (66) répondant à des signaux émis par le module de contrôle, un pointeau à double action (67) actionné par le solénoïde et conçu pour fonctionner solidairement tour à tour avec une paire de dits premier siège et second siège de soupape (81, 82), le fonctionnement solidaire dudit pointeau à double action (67) et du premier siège empêchant l'alimentation du surpresseur (19, 70) par la soupape actionnée par solénoïde mais permettant l'application des freins lorsque l'ensemble est actionné par la pédale, et le fonctionnement solidaire dudit élément à soupape (67) et du second siège de soupape permettant d'alimenter le surpresseur pour appliquer les freins sur la roue entraînée animée d'un mouvement de rotation sous le contrôle du moyen de régulation (44), l'application des freins sur les roues non entraînées étant empêché.

4. Un système hydraulique selon la revendication 3., caractérisé par le fait qu'une seconde soupape (100) à solénoïde pouvant être actionnée de manière séquentielle avec la soupape actionnée par solénoïde (65), ladite seconde soupape ayant pour fonction d'isoler les freins sur les roues non entraînées de leur source d'application des freins avant d'appliquer le frein sur ladite roue entraînée.

5. Un système hydraulique selon une des revendications 1. à 3. dans lequel l'ensemble composé (10) comporte un maître-cylindre hydraulique double comportant une première chambre sous pression (12) et une seconde chambre sous pression (13), et une chambre de surpression (19) pouvant être mise sous pression par un fluide hydraulique alimenté par une source de haute pression (41), ledit système hydraulique étant caractérisé par le fait que la communication entre la source (41) et la chambre de surpression (19) pour le ralentissement normal est contrôlée par la soupape à pression asservie (42) en réponse à une mise sous pression initiale de l'une de la chambre sous pression (12) lors de l'actionnement de la pédale, et par le fait que la communication entre la source (41) et la chambre de surpression (19) pour la commande de traction est commandée par les éléments à soupape de commande de traction (65, 100).

6. Un système hydraulique selon la revendication 5., caractérisé par le fait que le frein (5,6) sur chaque roue avant (1, 2) et sur chaque roue arrière diagonalement opposée (4, 3) est appliqué respectivement à partir d'une des deux chambres sous pression (13, 12), et l'alimentation en fluide à chaque frein est contrôlée par un régulateur (50, 51, 53, 52) réagissant à un signal de chacun des capteurs répartis respectivement (61, 62, 64, 63).

7. Un système hydraulique selon l'une des revendications 1 à 3, dans lequel l'ensemble composé (10) comporte un maître-cylindre hydraulique double (81) doté d'une première chambre sous pression et d'une seconde chambre sous pression et d'une chambre de surpression (96), fonctionnant solidairement avec un ensemble composé comprenant un surpresseur actionné pneumatiquement et un maître-cylindre auxiliaire (80) comprenant à son tour un surpresseur (80) et un maître-cylindre auxiliaire (83), la chambre de surpression étant mise sous pression par la pression d'un fluide hydraulique générée dans la chambre sous pression (84) du maître-cylindre auxiliaire (83) en réponse à une alimentation du surpresseur (80), ledit système étant caractérisé par le fait que ladite alimentation du surpresseur (80) pour le ralentissement normal est commandée par la soupape de commande à pression asservie en réponse à un actionnement initial de la pédale de l'ensemble composé (10), et que ladite alimentation du surpresseur (80) servant à contrôler la traction est contrôlé par le moyen de contrôle de traction à soupape (65, 100).

8. Un système hydraulique selon la revendication 7., caractérisé par le fait que les freins (5, 6) sur les roues avant (1, 2) du véhicule sont soumis à la pression des différentes chambres sous pression du maître-cylindre double, et que les freins (7, 8) sur les deux roues (3, 4) sont soumis à la pression du maître-cylindre auxiliaire (80), l'alimentation du surpresseur (80) par le moyen de contrôle de traction à soupape (65, 100) actionnant le maître-cylindre (83) pour mettre sous pression la chambre de surpresseur.

9. Un système hydraulique selon la revendication 8., caractérisé par le fait que les roues avant (1, 2) du véhicule sont entraînées, et les freins (7, 8) sur les roues arrière (3, 4) sont isolés du maître-cylindre (83) par le moyen de régulation (44) lorsque le moyen de contrôle de traction à soupape (65) est actionné pour alimenter le surpresseur (80).

10. Un système hydraulique selon la revendication 8., caractérisé par le fait que les roues arrière (3, 4) du véhicule sont entraînées, et la seconde soupape actionnée par solénoïde (100) a pour fonction d'isoler le maître-cylindre auxiliaire (83) à partir de la chambre de surpression (96) pour empêcher l'application des freins (5, 6) sur les roues avant lorsque le moyen à soupape de contrôle de traction (65) est actionné pour alimenter le surpresseur (80).

**Patentansprüche**

1. Hydrauliksystem für Fahrzeuge des Typs, mit einem Paar Vorderrädern (1,2) und einem Paar Hinterrädern (3,4) von dem erste und zweite Räder wenigstens eines Paares angetrieben sind und jedes Rad mit einer hydraulisch betätigten Bremse (5,6,7,8) versehen ist, das System dieser Art umfaßt einen kombinierten Hilfsmotor oder Servo und die hydraulische Hauptzylinderanordnung (10) zum Ansprechen aller Bremsen, ein Geschwindigkeitssensor (61, 62, 63, 64) zum Wahrnehmen der Umdrehungsgeschwindigkeit jedes Rades, Modulatoren (44) zum Aussteuern der Flüssigkeitszufuhr von der Anordnung zu den Bremsen und einen elektronischen Kontrollmodul (45), der Signale von den Geschwindigkeitssensoren erhält und wirksam ist, die Modulatoren der Reihe nach zu betätigen, um die Funktion einer Bremse zu kontrollieren, wodurch das Verhalten eines betreffenden Rades abhängig von der Art und der Dauer des Signals kontrolliert wird, in dem ein Pedal (11) zum Betätigen der kombinierten Anordnung (10) vorgesehen ist, um die Bremsen anzusprechen, und zwar normalerweise zu dem Zweck der Fahrzeuggeschwindigkeitsreduzierung und ein Servodruckkontrollventil (42) ist wirksam die Erzeugung der Servounterstützung für die Anordnung zu kontrollieren, in Erwiderung auf den Druck, der durch die Betätigung des Pedals erzeugt wird, Traktionskontrollventile (65, 100) empfindlich auf ein Umdrehungssignal eines angetriebenen Rades und anerkannt durch den Kontrollmodul, sind bestimmt die Erzeugung der Servounterstützung für die Anordnung zu kontrollieren, wodurch die Anordnung unabhängig von dem Pedal zu betätigen ist, um die Bremse an dem angetriebenen Rad anzusprechen, dadurch gekennzeichnet, daß die Erzeugung der Servounterstützung durch die Traktionskontrollventile unabhängig davon ist und das Servodruckkontrollventil umgeht.

2. Hydrauliksystem nach Anspruch 1, dadurch gekennzeichnet, daß das eine angetriebene Rad gradweise angesprochen wird und in einer Sequenz, die durch die Arbeit der Modulatoren (44) bestimmt ist.

3. Hydraulisches System nach Anspruch 1 oder 2, dadurch gekennzeichnet, daß die Anordnung (10) geeignet ist, unabhängig vom Pedal durch ein magnetspulbetätigtes Ventil (65) betätigt zu werden, welches eine Magnetspule (66), die empfindlich auf Signale des Kontrollmoduls ist, umfaßt, ein Ventilkörper (67) bedienbar durch die Magnetspule und ist geeignet, mit einem Paar von ersten und zweiten unterteilten Ventilsitzen (81, 82) zusammen zu wirken, das Zusammenwirken der Ventilkörper mit dem ersten Sitz verhindert die Erregung des Hilfsmotors (19, 70) durch das magnetspulbetätigte Ventil, aber erlaubt den Gebrauch der Bremsen, wenn die Anordnung durch das Pedal betätigt ist und das Zusammenwirken der Ventilkörper mit dem zweiten Sitz erlaubt die Erregung des Hilfsmotors, um das durchdrehende angetriebene Rad unter der Kontrolle der Modulatoren (44) zu bremsen, der Gebrauch der Bremsen an den nicht angetriebenen Rädern wird unterbunden.

4. Hydraulisches System nach Anspruch 3, dadurch gekennzeichnet, daß ein zweites magnetspulbetätigtes Ventil (100), das in Folge mit dem magnetspulbetätigten Ventil (65) bedienbar ist, wirksam ist, die Bremsen der nicht angetriebenen Räder von ihrer die Bremse ansprechenden Quelle zu isolieren, und zwar vor der Bremsansprache an dem einen angetriebenen Rad.

5. Hydrauliksystem nach einem der vorangegangenen Ansprüche, dadurch gekennzeichnet, daß die Anordnung (10) einen hydraulischen Tandemhauptzylinder umfaßt, mit ersten und zweiten Druckräumen (12, 13) und einem Hilfsmotorraum (19), der geeignet ist, durch Flüssigkeit von einer Hochdruckquelle (41), unter Druck gesetzt zu werden, dadurch gekennzeichnet, daß die Verbindung zwischen der Quelle (41) und dem Hilfsmotorraum (19), die für den normalen Zweck der Geschwindigkeitsreduzierung ist, kontrolliert wird durch das Servodruckkontrollventil (42), und zwar in Antwort auf die Initial-Druckerzeugung von einem der Druckräume (12) auf die Betätigung des Pedals hin und daß die Verbindung zwischen der Quelle (41) und dem Hilfsmotorraum (19) für die Traktionskontrolle durch die Traktionskontrollventile (65, 100) kontrolliert wird.

6. Hydrauliksystem nach Anspruch 5, dadurch gekennzeichnet, daß die Bremse (5, 6) jedes Vorderrades (1, 2) und jedes diagonal gegenüberliegenden Hinterrades (4, 3) angesprochen wird von einem der einschlägigen zwei Druckräume (13, 12) und die Zuführung von Flüssigkeit zu jeder Bremse durch einen Modulator (50, 51, 53, 52) kontrolliert wird, der auf ein Signal von jedem betreffenden Geschwindigkeitssensor (61, 62, 64, 63) empfindlich ist.

7. Hydrauliksystem nach einem der Ansprüche 1 bis 3, dadurch gekennzeichnet, daß die Anordnung (10) einen hydraulischen Tandemhauptzylinder (81) umfaßt, mit ersten und zweiten Druckräumen und einem Hilfsmotorraum (96) in Kombination mit einem pneumatisch betätigten Hilfsmotor und Zusatzhauptzylinderanordnung (80), die einen Hilfsmotor (80) und einen Zusatzhauptzylinder (83) umfaßt, wobei der Hilfsmotorraum durch Flüssigkeitsdruck in dem Druckraum (84) des Zusatzhauptzylinders (83) in Antwort auf die Erregung des Hilfsmotors (80) unter Druck gesetzt wird, dadurch gekennzeichnet, daß die Erregung des Hilfsmotors (80) für die normale Arbeit der Geschwindigkeitsreduzierung kontrolliert wird durch das Servodruckkontrollventil in Antwort auf die anfängliche Pedalbetätigung der Anordnung (10) und daß die Erregung des Hilfsmotors (80) für die Traktionskontrolle durch die Traktionskontrollventile (65, 100) kontrolliert wird.

8. Hydrauliksystem nach Anspruch 7, dadurch gekennzeichnet, daß die Bremsen (5, 6) an den Vorderrädern (1, 2) des Fahrzeugs jeweils von einem verschiedenen Druckraum des Tandemhauptzylinders angesprochen werden und die Bremsen (7, 8) an beiden Hinterrädern (3, 4) von dem Zusatzhauptzylinder (80), angesprochen werden, wobei die Erregung des Hilfsmotors (80) durch die Traktionskontrollventile (65, 100) den Zusatzhauptzylinder (83) betätigt, um den Hilfsmotorraum unter Druck zu setzen.

9. Hydrauliksystem nach Anspruch 8, dadurch gekennzeichnet, daß die Vorderräder (1, 2) des Fahrzeugs angetrieben sind und die Bremsen (7, 8) an den Hinterrädern (3, 4) von dem Zusatzhauptzylinder (83) durch den Modulator (44) isoliert sind, wenn die Traktionskontrollventile (65) arbeiten, um den Hilfsmotor (80) zu erregen.

10. Hydraualiksystem nach Anspruch 9, dadurch gekennezeichnet, daß die Hinterräder (3, 4) des Fahrzeugs angetrieben sind und das zweite magnetspulbetätigte Ventil (100) geeignet ist, den Zusatzhauptzylinder (83) von dem Hilfsmotorraum (96) zu isolieren, um die Betätigung der Bremsen (5, 6) an den Vorderrädern zu verhindern, wenn die Traktionskontrollventile (65) arbeiten, um den Hilfsmotor (80) zu erregen.

FIG1.

FIG.2

EP 0 267 018 B1

FIG.3.